# EUROPÄISCHE PATENTSCHRIFT

(11) **EP 3 627 175 B1**
(45) Veröffentlichungstag und Bekanntmachung des Hinweises auf die Patenterteilung: **22.07.2020**
(21) Anmeldenummer: 18195533.7
(22) Anmeldetag: 19.09.2018
(51) Int. Cl.: G01S 7/481, G02B 26/10, G02F 1/29

(54) **OPTOELEKTRONISCHER SENSOR UND VERFAHREN ZUR ABLENKUNG EINES LICHTSTRAHLS**
OPTOELECTRONIC SENSOR AND METHOD FOR DEFLECTING A BEAM OF LIGHT
DÉTECTEUR OPTOÉLECTRONIQUE ET PROCÉDÉ DE DÉVIATION D'UN FAISCEAU LUMINEUX

(43) Veröffentlichungstag der Anmeldung: 25.03.2020
(73) Patentinhaber: SICK AG, 79183 Waldkirch (DE)
(72) Erfinder: Gimpel, Hartmut, 79194 Gundelfingen (DE); Russ, Thomas, 79211 Denzlingen (DE)

(56) Entgegenhaltungen:
- US-A- 5 126 869
- US-A1- 2011 235 865
- US-A1- 2013 155 337
- US-B2- 6 587 180

## Beschreibung

Die Erfindung betrifft einen optoelektronischen Sensor und ein Verfahren zur Ablenkung eines Lichtstrahls.

Optische Abtastung wird schon lange in Laserscannern eingesetzt. Dabei überstreicht ein von einem Laser erzeugter Lichtstrahl mit Hilfe einer Ablenkeinheit periodisch den Überwachungsbereich und misst jeweils mit einem Lichtlaufzeitverfahren den Abstand zum angetasteten Objekt. In einem Pulsverfahren werden dafür Lichtpulse ausgesandt, und es wird die Dauer zwischen Sende- und Empfangszeitpunkt gemessen. In einem Phasenverfahren erfolgt eine periodische Amplitudenmodulation und Messung des Phasenversatzes zwischen Sende- und Empfangslicht. Neben der gemessenen Abstandinformation wird die Winkellage der Ablenkeinheit und damit des Objektes bestimmt, und so entstehen nach einer Abtastperiode Messpunkte mit Abstands- und Winkelwerten in Polarkoordinaten. Durch zusätzliche Variation oder Mehrstrahlabtastung im Elevationswinkel werden dreidimensionale Messpunkte aus einem Raumbereich erzeugt. Die Abtastung erfordert zwar besonders im Falle der 3D-Erfassung gegenüber Kameras eine gewisse Messzeit, aber dafür konzentriert sich die Messung auf einen Punkt und gewinnt dadurch Reichweite und verlässlichere Messwerte.

In den meisten Laserscannern wird die Abtastbewegung durch einen Drehspiegel oder ein Spiegelrad mit mehreren Facetten erreicht. Es ist auch bekannt, stattdessen den gesamten Messkopf mit einem oder mehreren Lichtsendern und Lichtempfängern rotieren zu lassen, wie dies beispielsweise in DE 197 57 849 B4 beschrieben ist. In wieder anderen Systemen wird eine Ablenkeinheit hin- und herverschwenkt, oder es wird beispielsweise in der US 2017/0307758 eine laterale Bewegung durch einen Biegemechanismus erzeugt. Jegliche mechanische Bewegung führt jedoch zu einer gewissen Baugröße und Stoßempfindlichkeit sowie zu Wartungsanfälligkeit infolge von Verschleiß.

Um daher mechanische Bewegung möglichst zu vermeiden, gibt es im Stand der Technik Bestrebungen, ein flächenscannendes System ohne rotierende Ablenkeinheit aufzubauen. Beispielsweise wird in der EP 2 708 914 A1 der gepulste Sendelichtstrahl einer Lichtquelle mit einem MEMS-Spiegel in X-Richtung und Y-Richtung über die abzutastende Fläche geführt. Die reflektierten Lichtpulse werden von einer SPAD-Matrix empfangen (Single-Photon Avalanche Diode), von der jeweils nur diejenigen SPADs aktiviert werden, die den aktuell von dem Sendelichtstrahl beleuchteten Bereich beobachten. Damit ist zwar der Verzicht auf ein rotierendes System gelungen. Empfangsseitig ist das System aber eigentlich eine Kamera und kein Scanner, da die Lichtstrahlen nicht gezielt von einem Messpunkt erfasst werden, sondern die gesamte Szenerie durch ein Objektiv abgebildet und dann nur punktuell ausgewertet wird. Dabei ist jeweils eines von mehreren tausend oder Millionen Pixel für eine bestimmte Richtung verantwortlich, und obwohl das System insgesamt teuer und aufwändig ist, bleibt das einzelne Pixel zwangsläufig angesichts der Gesamtzahl tendenziell von geringerer Qualität.

Es gibt neben dem schon genannten MEMS-Spiegel auch andere Möglichkeiten, den Sendestrahl ohne makroskopische Abtastbewegung mittels Drehspiegel oder dergleichen abzulenken, etwa Optical Phased Arrays, akusto-optische Modulatoren, elektrooptische Modulatoren oder Flüssigkristall-Wellenleiter wie in der US 9 366 938 B1. Das alles funktioniert aber nur für kleine Strahldurchmesser, die typischerweise nur sendeseitig gegeben sind. Für den großen Empfangsstrahlengang dagegen eignen sich die bisher bekannten Lösungen nicht.

Ein weiterer Ansatz zur Ablenkung von Lichtstrahlen basiert auf Polarisationsgittern. Sie lenken rechts- beziehungsweise linkszirkular polarisiertes Licht in jeweils eine andere der beiden ersten Beugungsordnungen ab, und eine schaltbare Variante erlaubt, die Polarisationsgitter wahlweise praktisch funktionslos zu machen, also einfallendes Licht in nullter Beugungsordnung geradeaus hindurchlaufen zu lassen. Durch Mehrfachanordnungen solcher Polarisationsgitter lassen sich auch mehrere Ablenkwinkel realisieren. Allerdings liegt die Effizienz für unpolarisiertes Licht funktionsbedingt immer unter 50 %. Vor allem haben aber Polarisationsgitter einen recht komplexen Aufbau, der sie vergleichsweise teuer macht, weil jeweils zwei bis vier Lagen von Flüssigkristallelementen je Polarisationslichtgitter notwendig sind. Mit der Strahlablenkung durch Polarisationsgitter befassen sich beispielsweise die US 8 982 313 B2 oder die US 2012/0188467 A1, ebenso die Arbeiten Buck, J., et al. "Polarization gratings for non-mechanical beam steering applications", Acquisition, Tracking, Pointing, and Laser Systems Technologies XXVI, Vol. 8395, International Society for Optics and Photonics, 2012 oder Kim, Jihwan, et al. "Wide-angle nonmechanical beam steering using thin liquid crystal polarization gratings", Advanced Wavefront Control: Methods, Devices, and Applications VI, Vol. 7093, International Society for Optics and Photonics, 2008.

Neben Polarisationsgittern gibt es auch andere schaltbare Gitter, deren Beugungsfunktion also durch elektrische Ansteuerung aktiviert und deaktiviert werden kann. In der US 6 567 573 B1 werden elektronisch schaltbare Bragggitter in WDM-Systemen (wavelength dividion multiplex) eingesetzt. Die US 6 587 180 B2 und die entsprechende Arbeit von Wang, Xu, et al. "Liquid-crystal blazed-grating beam deflector", Applied Optics 39.35 (2000): 6545-6555 nutzen sognannte schaltbare Blazegitter (blazed grating, geblazte Phasengitter) zur Strahlablenkung. In einem Stapel von Blazegittern werden die Gitterkonstanten jeweils von Blazegitter zu Blazegitter um einen Faktor zwei verfeinert. Durch Auswahl der eingeschalteten Blazegitter wird eine einzelne Beugungsordnung ausgewählt, die den Hauptteil des Lichts erhält.

Das in der US 6 587 180 B2 nicht erkannte Problem hierbei ist, dass sich die Ablenkwinkel der einzelnen Blazegitter nicht einfach aufaddieren, sondern eine Optimierung nur für einen begrenzten Einfallswinkelbereich möglich ist. Somit ist eine Auswahl von Ablenkwinkeln über ein großes Sichtfeld nicht oder nur mit großen Fehlern möglich. Denn ein derartiges Gitter kann entweder dünn ausgeführt werden, um einen großen Bereich von akzeptierten Einfallswinkeln abzudecken. Das führt aber zu einer schlechten Beugungseffizienz. Umgekehrt hat ein dicker ausgeführtes Gitter eine bessere Beugungseffizienz, dafür aber einen eingeschränkten Bereich von akzeptierten Einfallswinkeln. So ist beispielsweise nach Popovich, Milan, and Stephen Sagan "45.1: Application Specific Integrated Lenses for Displays", SID Symposium Digest of Technical Papers, Vol. 31. No. 1, Oxford, UK: Blackwell Publishing Ltd, 2000 eine Effizienz von etwa 80 % bei einem Einfallswinkelbereich von ca. ± 10° und damit einem Sichtfeld von lediglich 20° möglich.

Die bisher diskutierten schaltbaren Gitter beruhen auf der Verwendung von Flüssigkristallen. Es gibt darüber hinaus nicht nur weitere schaltbare Gitter mit Flüssigkristallen, sondern auch andere Wirkprinzipien ohne Flüssigkristalle, wie etwa in Li, Fudong, et al. "Near-infrared light-responsive dynamic wrinkle patterns", Science advances 4.4 (2018): eaar5762 beschrieben.

Es ist daher Aufgabe der Erfindung, die Strahlablenkung mit gestapelten schaltbaren Blazegittern zu verbessern.

Diese Aufgabe wird durch einen optoelektronischen Sensor und ein Verfahren zur Ablenkung eines Lichtstrahls nach Anspruch 1 beziehungsweise 14 gelöst. Der Sensor weist einen Lichtempfänger mit einer vorgeordneten Empfangsoptik und eine Steuer- und Auswertungseinheit auf. Neben möglichen üblichen Elementen zur Strahlformung und -aufbereitung umfasst die Empfangsoptik eine Strahlablenkvorrichtung, welche das elektronische Äquivalent eines herkömmlichen Scanmechanismus darstellt. In der Strahlablenkvorrichtung sind mehrere schaltbare Blazegitter (geblazte Phasengitter) vorgesehen, die hintereinander angeordnet sind und deshalb auch als Stapel oder Stack bezeichnet werden. Vorzugsweise tritt das gesamte Empfangslicht durch die mehreren Blazegitter hindurch. Das soll allerdings keineswegs neben einer transmissiven Anordnung eine reflexive Anordnung der Strahlablenkeinrichtung ausschließen, auch im reflexiven Fall durchdringt das Empfangslicht während der Reflexion die verschiedenen von den mehreren Blazegittern gebildeten Schichten. Die Blazegitter haben unterschiedliche Gitterkonstanten. Die Steuer- und Auswertungseinheit schaltet entsprechend dem gewünschten Ablenkwinkel die jeweiligen Blazegitter an oder aus, also beugend oder nicht beugend. Jedes eingeschaltete Blazegitter trägt abhängig von seiner jeweiligen Gitterkonstanten zu dem Ablenkwinkel bei, weshalb die Steuer- und Auswertungseinheit den insgesamt resultierenden Ablenkwinkel durch Auswahl der eingeschalteten Blazegitter variieren kann.

Die Erfindung geht von dem Grundgedanken aus, mindestens zwei Blazegitter mit gleicher Gitterkonstante in der Strahlablenkeinrichtung vorzusehen. Obwohl also die Gitterkonstanten in dem Stapel unterschiedlich sind, gibt es mindestens eine Gitterkonstante, die zumindest zweifach vertreten ist. Das scheint auf den ersten Blick überflüssig, denn durch Zuschalten eines einzigen Blazegitters mit dieser Gitterkonstanten wäre die entsprechende Veränderung des Ablenkwinkels mit dieser Gitterkonstanten entsprechender Granulierung schon möglich, es kommt also gar kein zusätzlich erreichbarer Ablenkwinkel hinzu. Tatsächlich kann aber ein Blazegitter gerade nicht den ihm zugedachten Beitrag über alle Einfallswinkel leisten. Das wird erfindungsgemäß dadurch gelöst, dass sich zwei oder mehr Blazegitter den Einfallswinkelbereich aufteilen, indem sie untereinander bei gleicher Gitterkonstante im Blazewinkel variieren. Dabei ist der Blazewinkel entsprechend der üblichen Begrifflichkeiten der intensitätsoptimierte Ausfallswinkel, in den das Blazegitter das einfallende Licht ablenkt. Das kann insbesondere der Winkel einer sägezahnartigen Struktur des Blazegitters sein.

Die Erfindung hat den Vorteil, dass eine einstellbare Ablenkung ohne mechanisch bewegte Teile auch empfangsseitig möglich wird, also bei großer Apertur eines Lichtbündels und nicht nur für kleine Strahlquerschnitte wie sendeseitig. Damit entsteht ein scannendes System (Solid-State-Scanner) mit guter Effizienz und großem Scanwinkel. Die mögliche Apertur übertrifft herkömmliche Lösungen wie einen MEMS-Spiegel im Empfangspfad, und durch die größere Empfangsapertur steigen die Leistungsfähigkeit und die Reichweite.

Gegenüber einer Empfangsmatrix ist der Aufbau vereinfacht und grundsätzlich nur ein Photodetektor erforderlich, wobei mehrere Photodetektoren beispielsweise für mehrere Scanstrahlen oder in einer kleinen SPAD-Matrix (Single-Photon Avalanche Diode) mit zusammengeschalteten Einzel-SPADs möglich bleiben. Gegenüber der sonst üblichen Vielzahl von Pixeln reduziert sich die Komplexität erheblich, was auch die Auswerteelektronik betrifft und zudem die Wärmeentwicklung im Sensor verringert. Außerdem können die wenigen noch erforderlichen Photodetektoren im Vergleich zu einem Einzelpixel einer großen Matrix wesentlich aufwändiger und besser sein, einschließlich der zugehörigen Analog-Elektronik, etwa durch Verwendung einer APD mit gutem Vorverstärker oder sogar Analog-Digital-Wandler, was für viele tausend Pixel in einer Matrix nicht darstellbar wäre. So verbessern sich Signal-Rauschverhältnis und damit Kenngrößen der Messung wie Reichweite, Fremdlichtfestigkeit und dergleichen. Sogar ein InGaAs-Detektor für Empfangslicht der Wellenlänge 1550 nm ist denkbar, denn dessen Kosten sind für einen Einzeldetektor noch zu verkraften, wohingegen eine InGaAs-Matrix mit sehr vielen Pixeln und einer großen Gesamtfläche aus Kostengründen praktisch nicht in Frage kommt.

Schließlich können aus Blazegittern im Vergleich zu Polarisationsgittern deutlich preisgünstigere Gitterstapel gebildet werden, da bereits eine Lage von Flüssigkristallmaterial je Gitter ausreichen kann und nicht von Vorneherein zwei oder gar vier Lagen benötigt werden. Indem erfindungsgemäß mindestens zwei Blazegitter gleicher Gitterkonstante, aber verschiedener Blazewinkel vorgesehen werden, wird auch das bisherige Problem eines begrenzten akzeptierten Einfallswinkelbereichs gelöst. Deshalb sind große Ablenkwinkel möglich, damit auch große Sichtfelder (FOV, Field of View) von 30° und mehr, ohne die Beugungseffizienz zu gefährden.

Die Steuer- und Auswertungseinheit ist bevorzugt dafür ausgebildet, in Abhängigkeit von dem gewünschten Ablenkwinkel jeweils nur eines der Blazegitter mit gleicher Gitterkonstante einzuschalten. Die beiden Blazegitter gleicher Gitterkonstante sind im Prinzip für denselben Beitrag zum Ablenkwinkel vorgesehen, insofern also in idealer Betrachtung redundant. Tatsächlich ist aber für den konkreten Einfallswinkel, den das Blazegitter verarbeiten soll, nur einer der unterschiedlichen Blazewinkel optimiert, und dieses Blazegitter wird in dieser Ausführungsform eingeschaltet, während das andere Blazegitter oder die anderen Blazegitter mit gleicher Gitterkonstante ausgeschaltet werden. Die Blazegitter mit gleicher Gitterkonstante teilen sich also den insgesamt zu bedienenden Bereich von gewünschten Ablenkwinkeln auf, und jedes dieser Blazegitter ist für einen bestimmten Teilwinkelbereich optimiert und zuständig, indem es exklusiv aktiviert wird, wenn ein einzustellender Ablenkwinkel der Strahlablenkeinheit in den jeweiligen Teilwinkelbereich fällt.

Die jeweilige Gitterkonstante ist bevorzugt ein Vielfaches einer Basisgitterkonstanten. Alle Blazegitter der Strahlablenkeinrichtung gehen also von einer gemeinsamen Basisgitterkonstanten aus. Als Einheit der Gitterkonstante wird hierbei Striche pro Länge vorausgesetzt, so dass ein Gitter mit einem Vielfachen der Basisgitterkonstanten entsprechend feiner wird. Durch die Verwandtschaft der Gitter über die Basisgitterkonstante ergibt sich die Möglichkeit, den Ablenkwinkel in diskreten Winkelschritten korrespondierend zu der Basisgitterkonstanten zu verändern. Bei Blazegittern, deren Gitterkonstanten in beliebigem Verhältnis zueinander stehen, ließen sich auch verschiedenste Winkelschritte kombinieren, die aber keine unmittelbar erkennbare Ordnung und Abfolge hätten.

Die Gitterkonstanten stehen vorzugsweise in einem Verhältnis 2^n zueinander, wobei n eine natürliche Zahl ist. Auch die Null ist zulässig, Blazegitter mit diesem Verhältnis haben dieselbe Gitterkonstante, wie dies ja erfindungsgemäß für zumindest zwei Blazegitter vorgesehen ist. Ansonsten ist von zwei beliebigen Blazegittern jeweils das eine doppelt, viermal, achtmal oder eben allgemein 2^n mal so fein wie das andere. Eine bevorzugte Anordnung besetzt jedes n mindestens einmal, so dass sich dann wie bei einer Binärzahl alle Vielfachen der kleinsten Ablenkung bis hin zur maximal möglichen Ablenkung durch ein- und ausschalten der Blazegitter als Ablenkwinkel einstellen lassen.

Die Steuer- und Auswertungseinheit ist bevorzugt dafür ausgebildet, den Ablenkwinkel mit einer Winkelauflösung über einen Empfangswinkelbereich der Strahlablenkeinrichtung zu variieren. Dazu werden beispielsweise alle Kombinationen von ein- und ausgeschalteten Blazegittern durchgespielt. Im Falle der Blazegitter gleicher Gitterkonstante wird vorzugsweise abweichend jeweils immer nur das besser für den jeweiligen Ablenkwinkel passende Blazegitter aktiviert. Je nach Konfiguration, insbesondere im Falle des schon erläuterten Verhältnisses 2^n der Gitterkonstanten durch binäres Zählen, lässt sich ein Empfangswinkelbereich mit zumindest annähernd gleichmäßigen Schritten ähnlich einem mechanischen Scanner von links nach rechts durchfahren. Im Grunde ist aber die Abfolge der Ablenkwinkel belanglos, solange nur die Messwerte dem jeweiligen Ablenkwinkel richtig zugeordnet werden. Auch kann gezielt mit der Auslegung der Blazegitter und/oder deren Schalten von äquidistanten Winkelschritten abgewichen werden. Die Beziehung der verschiedenen An/Aus-Konfigurationen der Blazegitter zu einem jeweiligen Ablenkwinkel kann in der Steuer- und Auswertungseinheit mittels Algorithmus bestimmt oder beispielsweise in einer Nachschlagtabelle (LUT, Lookup Table) abgelegt sein.

Der Lichtempfänger ist bevorzugt ein Einzeldetektor. Durch das Scanprinzip können ein im Vergleich zu einem Pixel einer Matrixanordnung sehr hochwertiger Lichtempfänger beziehungsweise aufwändige elektronische Schaltkreise zu dessen Ansteuerung und Aufbereitung eingesetzt werden. Es besteht auch die Möglichkeit, einige wenige hochwertige beziehungsweise aufwändig verschaltete Empfangselemente zu dem Einzeldetektor zusammenzufassen, etwa um im Falle von SPADs eine gewisse Statistik zur erhöhten Robustheit gegen Fremdlicht- und Dunkelereignisse zu erreichen.

Die Empfangsoptik weist bevorzugt eine weitere Strahlablenkeinrichtung mit mehreren hintereinander angeordneten schaltbaren Blazegittern untereinander unterschiedlicher Gitterkonstanten in zu der Strahlablenkeinrichtung gekreuzter Orientierung der Blazegitter auf. Anders ausgedrückt wird ein zweiter erfindungsgemäßer Stapel von Blazegittern als weitere Strahlablenkung genutzt, wobei für beide Stapel alle beschriebenen Optionen und Ausgestaltungsmöglichkeiten zur Verfügung stehen. Die beiden gekreuzten Stapel von Blazegittern ermöglichen eine Ablenkung in zwei Richtungen für einen 3D-Scan.

Die Strahlablenkeinrichtung steht vorzugsweise schräg zu einer senkrechten beziehungsweise mittleren Einfallsrichtung von Empfangslicht. Bei einem mechanischen Scanmechanismus wäre die natürliche Wahl eines Empfangswinkelbereichs um die senkrechte Einfallsrichtung bei 0° zentriert, so dass beispielsweise der Empfangswinkelbereich das Intervall [-30°, 30°] ist. Das ist aber für manche Bauformen von Blazegittern ungünstig, die besser mit flacheren Ablenkwinkeln zurechtkommen und dann eine bessere Beugungseffizienz zeigen. Deshalb wird in dieser Ausführungsform die Strahlablenkeinrichtung schräg angeordnet, so dass der Empfangswinkelbereich außermittig verschoben ist und beispielsweise bei [10°, 70°] um 40° zentriert liegt. Indem die Strahlablenkeinrichtung entsprechend um 40° schräg gestellt wird, ist der effektive Sichtbereich des Sensors wieder derselbe wie im um 0° zentrierten Fall.

Die Strahlablenkeinrichtung weist bevorzugt mindestens eine Wellenplatte auf. Die Wellenplatte dient nicht der Beugung beziehungsweise Lichtablenkung, soll also zu dem Ablenkwinkel nicht beitragen. Sie führt vielmehr nur eine konstante Phasenverschiebung für das einfallende Lichtbündel ein, insbesondere in Form einer Halbwellenplatte oder Viertelwellenplatte. Vorzugsweise ist die Wellenplatte die oberste Schicht der Strahlablenkeinrichtung. In einer bevorzugten Ausführungsform ist die Wellenplatte schaltbar. Dann kann eine Messung mit und eine Messung ohne Wirkung der Wellenplatte erfolgen, gleichbedeutend mit einer Messung mit und ohne Polarisationsänderung.

Der Sensor weist bevorzugt einen Lichtsender und eine Sendeoptik mit einer sendeseitigen Strahlablenkeinrichtung zum Aussenden eines Sendelichtstrahls mit einem gewünschten Ablenkwinkel auf. Durch gleiche Ansteuerung der sende- und empfangsseitigen Ablenkwinkel entsteht dann ein aktiver Solid-State-Scanner. Die sendeseitige Strahlablenkeinrichtung ist allgemein in beliebiger Technologie realisiert, etwa mittels MEMS-Spiegel oder eines anderen einleitend schon genannten Mittels. Denkbar ist auch, dass der Lichtsender eine Vielzahl von Lichtquellen aufweist, wie LEDs oder VCSEL, von denen jeweils diejenige oder diejenigen für den Ablenkwinkel aktiviert wird oder werden, oder dass der Lichtsender bereits eine ganze Zeile oder Fläche beleuchtet.

Die sendeseitige Strahlablenkeinrichtung weist bevorzugt mehrere hintereinander angeordnete schaltbare Blazegitter unterschiedlicher Gitterkonstanten auf. Somit wird sendeseitig dasselbe Prinzip genutzt wie empfangsseitig, wobei auch alle für die Empfangsseite beschriebenen Ausgestaltungsmöglichkeiten denkbar sind.

Besonders bevorzugt fungiert die Strahlablenkeinrichtung in Doppelfunktion als sendeseitige Strahlablenkeinrichtung. Es wird also sendeseitig nicht nur dasselbe Prinzip genutzt wie empfangsseitig, sondern derselbe Stapel von Blazegittern. Das vereinfacht Aufbau und Ansteuerung, und dabei sind die Ablenkwinkel automatisch sende- und empfangsseitig passend ausgerichtet und synchron eingestellt.

Die Steuer- und Auswertungseinheit ist vorzugsweise dafür ausgebildet, eine Lichtlaufzeit des ausgesandten und von dem Lichtempfänger wieder empfangenen Sendelichtstrahls zu bestimmen. Damit wird der Sensor entfernungsmessend, ganz wie üblicherweise die klassischen Laserscanner, die somit zumindest in einigen Anwendungsfeldern durch einen Solid-State-Scanner oder ein Solid-State-LiDAR (Light Detection and Ranging) ersetzt werden können.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines optoelektronischen Sensors mit einer Strahlablenkung mittels gestapelter Blazegitter;
- Fig. 2: eine schematische Darstellung gestapelter Blazegitter, von denen mindestens zwei die gleiche Gitterkonstante, jedoch unterschiedliche Blazewinkel haben;
- Fig. 3: eine vergleichende Darstellung des Beugungswinkels und des Blazewinkels in Abhängigkeit von der Beugungsordnung bei herkömmlichen gestapelten Blazegittern;
- Fig. 4: eine Darstellung ähnlich Figur 3, jedoch bei Optimierung der Blazewinkel für den Mittelwert der Ablenkwinkel, zu denen das jeweilige einzelne Blazegitter tatsächlich beiträgt;
- Fig. 5: eine Darstellung ähnlich Figur 3, jedoch bei Verwendung gestapelter Blazegitter, von denen mindestens zwei die gleiche Gitterkonstante, jedoch unterschiedliche Blazewinkel haben;
- Fig. 6: eine schematische Darstellung eines optoelektronischen Sensors, in dem die gestapelten Blazegitter auch für die sendeseitige Strahlablenkung genutzt werden;
- Fig. 7: eine schematische Darstellung eines optoelektronischen Sensors mit den gestapelten Blazegittern in einer reflexiven statt transmissiven Anordnung;
- Fig. 8: eine schematische Darstellung schräg gestellter gestapelter Blazegitter für eine außermittige Verschiebung des Ablenkwinkelbereichs; und
- Fig. 9: eine schematische Darstellung gestapelter Blazegitter mit einer zusätzlichen Wellenplatte.

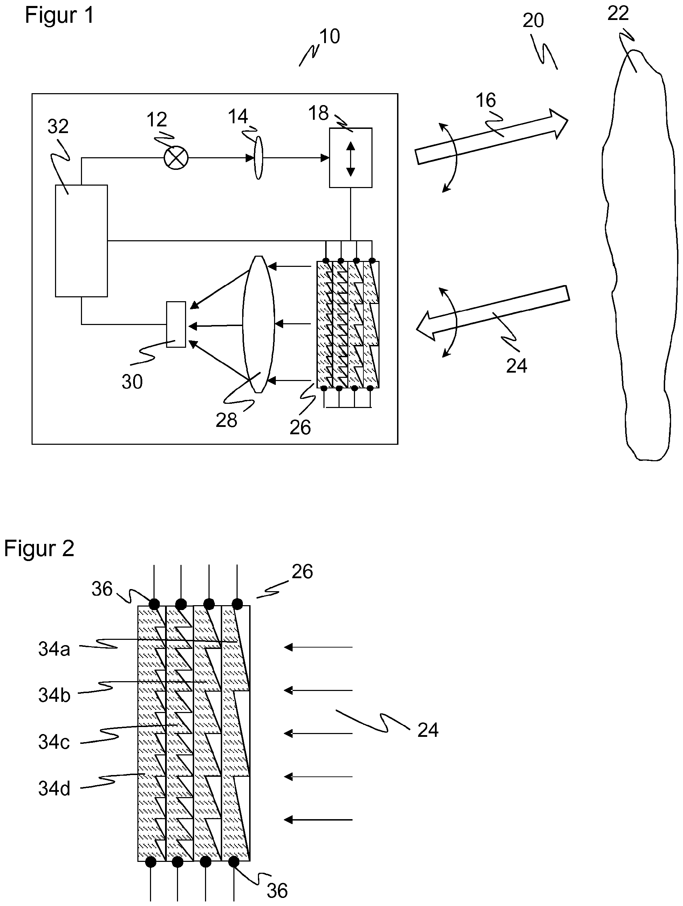

Figur 1 zeigt eine schematische Schnittdarstellung eines optoelektronischen Sensors 10. Ein Lichtsender 12 erzeugt mittels einer strahlformenden Optik 14 ein Sendelichtbündel 16, das über eine sendeseitige Strahlablenkeinrichtung 18 in verschiedene Richtungen in einen Überwachungsbereich 20 ausgesandt werden kann, wie dies durch einen Pfeil angedeutet ist. Die strahlformende Optik 14, die nur stellvertretend als einfache Linse dargestellt ist, bildet gemeinsam mit der sendeseitigen Strahlablenkeinrichtung 18 eine Sendeoptik. Der Lichtsender 12 kann als LED oder Laser, insbesondere als VCSEL-Laser oder kantenemittierende Laserdiode ausgeführt sein.

Trifft das Sendelichtbündel 16 im Überwachungsbereich 20 auf ein Objekt 22, so kehrt ein Teil des Lichts als remittiertes Empfangslichtbündel 24 zu dem Sensor 10 zurück. Eine empfangsseitige Strahlablenkeinrichtung 26 ist auf die erwartete Empfangsrichtung entsprechend der sendeseitigen Strahlablenkeinrichtung 18 eingestellt und lenkt das Empfangslichtbündel 24 mit einem passenden Ablenkwinkel auf eine strahlformende Optik 28 um. Dort wird das Empfangslichtbündel 24 auf einen Lichtempfänger 30 gebündelt. Die strahlformende Optik 28, die nur stellvertretend als einfache Linse dargestellt ist, bildet gemeinsam mit der empfangsseitigen Strahlablenkeinrichtung 26 eine Empfangsoptik. Der Lichtempfänger 30 ist beispielsweise eine PIN-Diode, eine APD (Avalanche Photodiode, Lawinenphotodiode) oder eine Einzelphotonen-APD (SPAD, Single-Photon APD) beziehungsweise eine Mehrfachanordnung davon. Der Lichtempfänger 30 kann mit nicht gezeigter Elektronik verbunden sein, etwa analoger Vorverstärkung, Filterung, einem nachgeschalteten Analog-Digital-Wandler und dergleichen.

Der Aufbau der empfangsseitigen Strahlablenkeinrichtung 26 sowie deren mögliche Ausgestaltungen und Varianten werden später unter Bezugnahme auf die Figuren 2 bis 9 näher erläutert. Die rein schematisch gezeigte sendeseitige Strahlablenkeinrichtung 18 kann je nach Ausführungsform auf demselben Prinzip basieren, sogar die empfangsseitige Strahlablenkeinrichtung 26 mit nutzen, oder eine andere Technik zur Strahlablenkung nutzen wie beispielhaft einleitend genannt. Im Sendepfad muss im Übrigen auch kein Scanmechanismus vorgesehen sein, indem eine Linien- oder sogar Flächenbeleuchtung eingesetzt wird. Andererseits ist auch denkbar, mit einer Linien- oder Flächenbeleuchtung zu scannen, etwa eine Lichtlinie senkrecht zu ihrer langen Achse zu bewegen. Auch ein passives System ohne eigenen Lichtsender ist denkbar.

Eine Steuer- und Auswertungseinheit 32 steuert den Lichtsender 12 sowie die sende- und empfangsseitigen Strahlablenkeinrichtungen 18, 26 und wertet das Empfangssignal des Lichtempfängers 30 aus, um das Objekt 22 zu erfassen. Die Auswertung kann analog und/oder digital erfolgen und beispielsweise ein Lichtlaufzeitverfahren beinhalten, um den Abstand zu dem Objekt 22 zu messen, etwa ein an sich bekanntes Einzelpuls-, Mehrpuls- oder Phasenverfahren. Die Steuer- und Auswertungseinheit 32 steht auch stellvertretend für weitere mögliche elektronische Komponenten des Sensors 10, auf die nicht näher eingegangen wird.

Der Aufbau des Sensors 10 ist nur beispielhaft zu verstehen. Mittels der Strahlablenkeinrichtungen 18, 26 lässt sich ein Scanner ohne mechanisch bewegte Teile realisieren (Solid-State-Scanner). Das kann mit einer Abstandsmessung mittels Lichtlaufzeitmessung verbunden werden wie erläutert, aber alternativ sind ebenso andere Detektionen wie reine Objektanwesenheit möglich. Wird beispielsweise ein Lichtsender 12 nicht mit punktartigem Strahlquerschnitt eingesetzt, sondern eine bewegte Laserlinie erzeugt, so lässt sich eine Abstandsmessung auch durch Triangulation beziehungsweise Lichtschnittverfahren umsetzen. All dies sind nur Beispiele für denkbare Messverfahren in einem optischen Scanner.

Figur 2 zeigt eine vergrößerte Darstellung der empfangsseitigen Strahlablenkeinrichtung 26. Sie weist mehrere Blazegitter 34a-d (geblazte Phasengitter) auf, die zu einem Stapel hintereinander angeordnet sind und nacheinander von dem Empfangslichtbündel 24 durchdrungen werden. Die Blazegitter 34a-c haben unterschiedliche Gitterkonstanten, die beiden Blazegitter 34c-d jedoch dieselbe Gitterkonstante. Dafür unterscheiden sich die beiden Blazegitter 34c-d im Blazewinkel. In einer bevorzugten Ausführungsform wie dargestellt sind die Gitterkonstanten jeweils Vielfache einer Basisgitterkonstanten g0, deren Einheit in Strichen pro Länge angegeben ist. Eine Gitterkonstante k^{∗}g0 bedeutet also ein k-fach feineres Gitter. In besonders bevorzugten Ausführungsform sind die Gitterkonstanten in einer 2^n-Abfolge, n=0, 1, 2, 3, ..., gewählt, d.h. g0, 2g0, 4g0, 8g0, ....

Wie bereits ausgeführt, bildet das letzte Blazegitter 34d eine Ausnahme, da es dieselbe Gitterkonstante aufweist wie das vorletzte Blazegitter 34c. Die Blazegitter 34c-d gleicher Gitterkonstante müssen aber weder zwingend die letzten beiden sein, noch direkt aufeinanderfolgen. Ohnehin können es auch drei oder mehr Blazegitter sein, die eine gleiche Gitterkonstante, aber jeweils einen eigenen, untereinander unterschiedlichen Blazewinkel aufweisen. Ebenso denkbar sind mehr als eine Gruppe mit zwei oder mehr Blazegittern gleicher Gitterkonstante und zwei oder mehr unterschiedlichen Blazewinkeln.

In der Figur 2 sind die individuellen Eigenschaften der Blazegitter 34a-d durch deren Textur nur rein symbolisch angedeutet. Die Blazegitter 34a-d weisen jeweils Anschlüsse 36 auf, über die sie von der Steuer- und Auswertungseinheit 32 vorzugsweise individuell ein- und ausgeschaltet werden. Ein eingeschaltetes Blazegitter 34a-d hat beugende Eigenschaften, ein ausgeschaltetes Blazegitter 34a-d dagegen bewirkt keine Ablenkung und lässt das Empfangslichtbündel 24 im Wesentlichen unverändert passieren.

Die Blazegitter 34a-d können beispielsweise mit Flüssigkristallen aufgebaut sein. In einer Ausführungsform wird je eine transparente Scheibe mit einer periodischen Prismenstruktur geformt, und darauf folgt eine Lage an Flüssigkristallen ähnlich wie in der einleitend schon genannten US 6 587 180 B2. In einer alternativen Bauform mit Flüssigkristallen ähnlich wie in US 6 567 573 B1 werden periodische Ebenen von Flüssigkristallmaterial direkt in einem Polymer erzeugt.

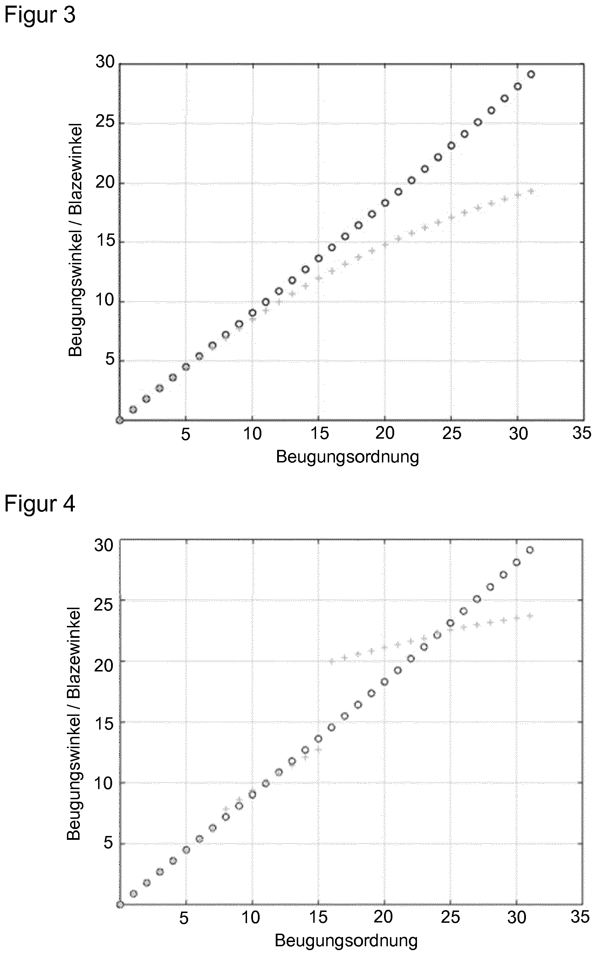

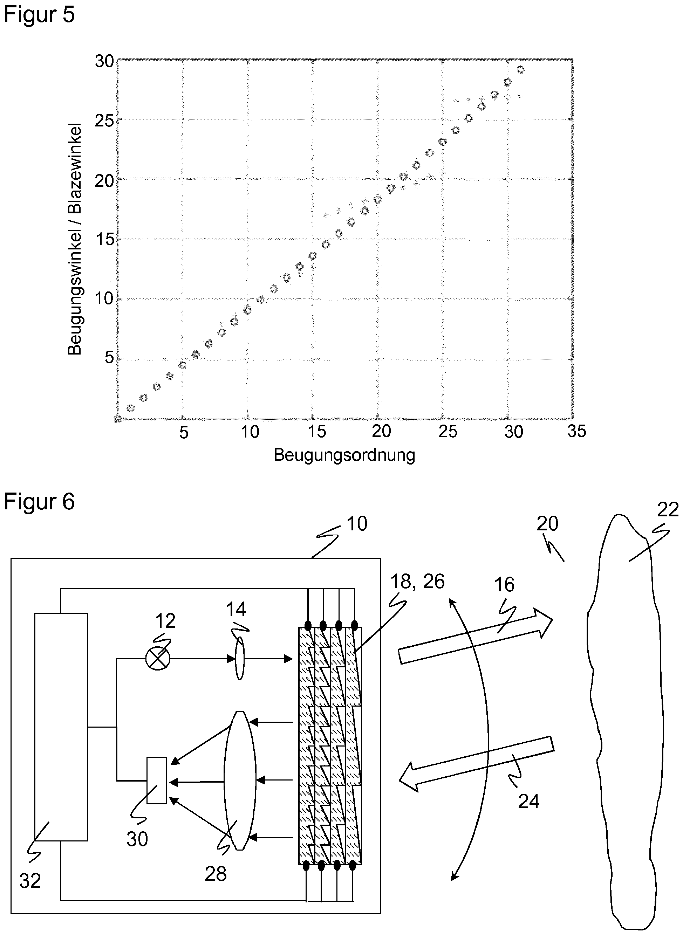

Um das Funktionsprinzip der empfangsseitigen Strahlablenkeinrichtung 26 zu verstehen, wird nun zunächst ganz allgemein die Wirkungsweise eines einzelnen Blazegitters 34a-d, dann unter Bezugnahme auf die Figuren 3 und 4 eines Stapels von Blazegittern mit durchwegs unterschiedlichen Gitterkonstanten und schließlich unter Bezugnahme auf die Figur 5 eines erfindungsgemäßen Stapels von Blazegittern 34a-d mit mindestens zwei Blazegittern 34c-d erläutert, die sich bei untereinander identischer Gitterkonstante im Blazewinkel unterscheiden.

Ein effizientes Beugungsgitter muss zwei Winkelbedingungen gleichzeitig kontrollieren. Zum einen ergeben sich durch die Periodizität des Gitters beziehungsweise die Gitterkonstante die möglichen Beugungswinkel. Hierbei legt die Gittergleichung die Winkel aller möglichen Beugungsordnungen fest, ohne eine Aussage über die dortige Lichtintensität zu machen. Als zweites kann die Ausgestaltung eines einzelnen Elements dieses Beugungsgitters angepasst werden, also sozusagen die Form des Einzelspalts. Beispielsweise kann dieses Einzelelement so angepasst werden, dass es sehr effizient Licht in eine der möglichen Beugungsordnungen, aber in keine andere Beugungsordnung bringt. Den derart intensitätsoptimierten Ausfallswinkel nennt man den Blazewinkel des Gitters. Eine Umsetzungsmöglichkeit besteht darin, eine sägezahnartige Struktur auszubilden, die in den Einzelspalten Prismen erzeugt, wobei dann der Prismenwinkel den Blazewinkel festlegt.

Werden mehrere Blazegitter gestapelt, so kann deren Kombination vereinfachend wiederum als ein gemeinsames Gitter angesehen werden, es werden also alle Blazegitter des Stapels gedanklich zu dem gemeinsamen Gitter verschmolzen. Indem die einzelnen Blazegitter des Stapels individuell ein- und ausgeschaltet werden, ergeben sich unterschiedliche gemeinsame Gitter, und das erfindungsgemäße Ziel ist, dass jede mögliche beziehungsweise jede genutzte Schaltkombination eine gute Effizienz ergibt, also möglichst viel Empfangslicht 24 in die gewünschte Richtung lenkt. Um im Folgenden die Gedankengänge zu vereinfachen, wird das von den jeweils eingeschalteten einzelnen Blazegittern gebildete gemeinsame Gitter für ein mit einem Einfallswinkel von 0° auftreffendes Empfangslichtbündel 24 betrachtet, wobei der jeweilige Einzelspalt vereinfachend aus einem Prisma besteht, welches die kumulierten Beugungs- und Ablenkeffekte an dieser Stelle symbolisch zusammenfasst. Das kann insbesondere in einem einfachen Modell ein gemeinsames Prisma entsprechend der Summe der Steigungen der beitragenden Prismen der einzelnen Blazegitter sein.

Damit die Gittergleichung für alle möglichen Kombinationen von einzelnen Blazegittern gemeinsame Werte für die erzielbaren Beugungsordnungen erlaubt, werden die jeweiligen Gitterkonstanten in ganzzahligen Verhältnissen gewählt. Dabei gibt es eine kleinste Gitterkonstante g0 und gestaffelt größere Gitterkonstanten 2g0, 4g0, 8g0 und 16g0, wobei weiterhin Gitterkonstanten in der Einheit Striche pro Länge angenommen sind und daher Gitter mit größerer Gitterkonstante feiner sind.

Figur 3 zeigt, welche Beugungswinkel (kleine Kreise) und Blazewinkel (kleine Kreuze) sich in dem vereinfachten Modell mit aufsummierten Prismensteigungen der einzelnen Blazegitter in den verschiedenen Beugungsordnungen ergeben. Die Zahlenwerte sind jeweils als Beugungsordnungen für g0 angegeben. Die einzelnen Beugungsordnungen werden ausgewählt, indem jeweils eine andere Kombination von einzelnen Blazegittern aktiv geschaltet wird. Entsprechend einer Binärzahl mit fünf Stellen ergeben sich für fünf Blazegitter mit den im vorigen Absatz angegebenen Gitterkonstanten 2^5=32 Beugungsordnungen oder Ablenkwinkel.

Es lässt sich deutlich erkennen, dass für höhere Beugungsordnung und damit große Ablenkwinkel der Beugungswinkel anders verläuft als der Blazewinkel. Wird also einfach das Blazegitter mit der kleinsten Gitterkonstanten g0 optimiert und dann entsprechend für die größeren Gitterkonstanten vervielfacht und gestaucht, dann passt für hohe Beugungsordnungen der von dem Stapel als gemeinsames Gitter erzeugte Blazewinkel nicht mehr zum Beugungswinkel, die Beugungseffizienz des gemeinsamen Gitters sinkt also dramatisch ab. Das liegt im Übrigen daran, dass der Beugungswinkel durch Beugung verursacht wird, der Blazewinkel dagegen durch Brechung. Diese beiden Lichtphänomene skalieren unterschiedlich bei der kumulierten Wirkung oder effektiven Addition mehrere Prismen.

Die Folgerung aus Figur 3 ist, dass für große Ablenkwinkel und damit einen großen Scanbereich beziehungsweise ein großes Sichtfeld des Sensors 10 ein Stapel von schaltbaren Blazegittern mit durchwegs unterschiedlichen Gitterkonstanten ungeeignet ist, weil an der Seite bei zunehmendem Ablenkwinkel die Lichteffizienz einbricht. Ein derartiger Stapel von Blazegittern eignet sich also allenfalls für ein kleines Sichtfeld <20°, in dem die Verluste noch hingenommen werden können.

Figur 4 illustriert in einer Darstellung ähnlich Figur 3 eine erste denkbare Verbesserung. Bisher wurden alle Blazegitter gleichartig, nämlich entsprechend dem Blazegitter kleinster Gitterkonstante g0 ausgelegt. Die feineren Blazegitter mit größeren Gitterkonstanten werden aber gar nicht für alle Beugungsordnungen genutzt. Eine bessere Herangehensweise ist daher eine Optimierung auf den mittleren derjenigen Ablenkwinkel, in denen das jeweilige Blazegitter tatsächlich aktiv geschaltet ist. Das wären beispielsweise für das feinste Blazegitter die größere Hälfte der Ablenkwinkel oder die Beugungsordnungen 16 bis 31. Wird das feinste Blazegitter auf diesen eigentlichen Arbeitsbereich optimiert, so wird das in Figur 4 dargestellte Ergebnis erzielt. Die Abweichung zwischen Beugungswinkel und Blazewinkel ist schon reduziert, beträgt aber im Maximum immer noch ca. 6°.

Figur 5 illustriert in einer weiteren Darstellung ähnlich Figur 3 das Verhalten des von den Blazegittern gebildeten gemeinsamen Gitters, wenn mehrere Blazegitter derselben Gitterkonstanten mit unterschiedlichen Blazewinkel eingesetzt werden. Im konkreten Beispiel ist das feinste Blazegitter verdoppelt. Dadurch kann die Optimierung an zwei Stellen einsetzen, jeweils einmal je Blazegitter gleicher Gitterkonstante, wodurch die eine Linie von kleinen Kreuzen in Figur 4 in zwei deutlich besser angepasste Linien geteilt wird. Je nachdem, welcher Ablenkwinkel benötigt wird, schaltet die Steuer- und Auswertungseinheit 32 das eine oder das andere Blazegitter mit der kleineren Abweichung aktiv. So kann die maximale Abweichung zwischen Beugungswinkel und Blazewinkel nochmals deutlich reduziert werden, im dargestellten Fall auf nun maximal nur noch etwa 2,5°. Dadurch ist beispielsweise die Beugungseffizienz bei 20° FWHM wie in der einleitend genannten Arbeit von Popovitch et al. deutlich verbessert, nämlich von ca. 80 % der Peakeffizienz gemäß deren Figur 2a auf ca. 95 %.

Der Darstellung in Figur 5 liegt folgendes Zahlenbeispiel zugrunde, das auch schon die konkreten Zahlenwerte in den Figuren 3 und 4 ergibt: Die Gitter sind für eine Wellenlänge des Sendelichtbündels 16 und entsprechend des Empfangslichtbündels 24 von 1550 nm ausgelegt. Die kleinste Gitterkonstante g0 liegt bei einem Linienpaar pro 98,68µm, was einem kleinsten Ablenkwinkel oder einem Abstand zwischen den Beugungsordnungen von 0,9° entspricht. Das feinste Gitter mit der größten Gitterkonstante 16g0 ist doppelt vorgesehen, jedoch mit jeweils individuell optimiertem Blazewinkel. Der Indexsprung der gedanklich vereinfachten Prismen in den Einzelspalten ist Δn = 0,15.

Es gibt darin die folgenden 5+1 Blazegitter jeweils mit Gitterkonstante g:

| | | |
|---|---|---|
| g=g0 | Beitrag Ablenkwinkel 1*0,9° | geometrischer Prismenwinkel 6° |
| g= 2*g0 | Beitrag Ablenkwinkel 2*0,9°=1,8° | geometrischer Prismenwinkel: 12° |
| g=4*g0 | Beitrag Ablenkwinkel 4*0,9°=3,6° | geometrischer Prismenwinkel: 23° |
| g=8*g0 | Beitrag Ablenkwinkel 8*0,9°=7,2° | geometrischer Prismenwinkel: 44° |
| g=16*g0 | Beitrag Ablenkwinkel 16*0,9=14,4° | geometrischer Prismenwinkel: 74° |
| | verwendet für Beugungsordnungen bis 25 | |
| g=16*g0 | Beitrag Ablenkwinkel 16*0,9°=14,4° | geometrischer Prismenwinkel: 86° |
| | verwendet für Beugungsordnungen 26 ... 31 | |

Figur 6 zeigt eine weitere Ausführungsform des Sensors 10. Hier fungiert die Strahlablenkeinrichtung 26 des Empfangspfades zugleich als sendeseitige Strahlablenkeinrichtung 18. Das spart nicht nur Bauteile und Ansteuerungen, sondern auf diese Weise sind die sendeseitigen Ablenkwinkel automatisch zu den empfangsseitigen Ablenkwinkeln kalibriert. Abweichend von Figur 6 wäre auch denkbar, eine separate sendeseitige Strahlablenkeinrichtung 18 vorzusehen, die aber genauso aufgebaut ist wie die empfangsseitige Strahlablenkeinrichtung 26, also einen Stapel von schaltbaren Blazegittern aufweist, von denen mindestens zwei eine gleiche Gitterkonstante, jedoch unterschiedliche Blazewinkel aufweisen.

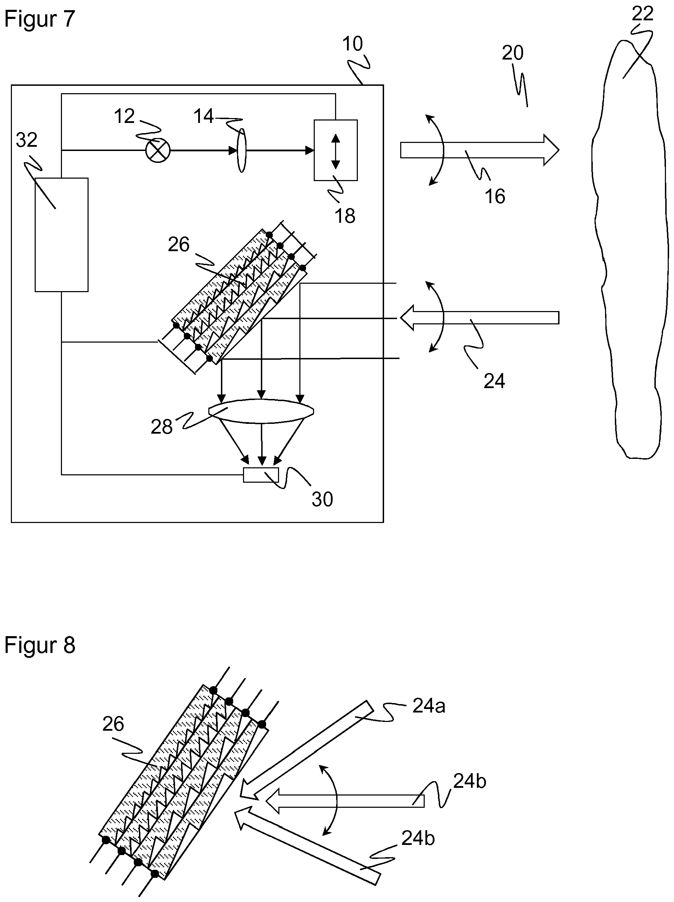

Figur 7 zeigt eine weitere Ausführungsform des Sensors 10. Dabei ist die Strahlablenkeinrichtung 26 reflektiv statt transmittierend ausgeführt, also kein Transmissionsgitter wie in den bisherigen Figuren und Ausführungsformen, sondern ein Reflexionsgitter. Die Funktionsweise und Ausgestaltungsmöglichkeiten sind dabei entsprechend. Reflexionsgitter können je nach Bauweise effizienter mit unterschiedlichen Polarisationen umgehen.

Figur 8 zeigt eine weitere Ausführungsform des Sensors 10, in welcher die Strahlablenkeinrichtung 26 und damit deren Blazegitter 34a-d schräg angeordnet sind. Das sollte nicht mit der Anordnung in Figur 7 verwechselt werden, in Figur 8 basiert die Strahlablenkeinrichtung 26 auf einem Transmissionsgitter. Schräg angeordnet bedeutet nicht etwa, dass ein Empfangslichtbündel 24 aus schräger Richtung empfangen wird, was ja wegen der variierenden Ablenkwinkel während eines Scans fast immer der Fall ist. Vielmehr steht die Strahlablenkeinrichtung 26 schräg zu dem von den Ablenkwinkeln gebildeten Empfangswinkelbereich. Dieser Empfangswinkelbereich wird von den Empfangslichtbündeln 24a-b bei minimalem und maximalem Ablenkwinkel bestimmt. Ein darin mittiges Empfangslichtbündel 24c würde bei nicht schräg stehender Strahlablenkeinrichtung 26 senkrecht mit einem Einfallswinkel von 0° auftreffen. Die schräg stehende Strahlablenkeinrichtung 26 verschiebt diese Mitte. Als Zahlenbeispiel variieren die Scanwinkel nicht zwischen -30° und +30° mit zentrierter Mitte bei 0°, sondern mit schräg stehender Strahlablenkeinrichtung 26 von 10° bis 70° mit verschobener Mitte bei 40°. Das ist für bestimmte Bauformen der Blazegitter vorteilhaft, um hohe Beugungseffizienzen zu erreichen. Für die Funktion des Sensors 10 insgesamt wirkt sich das nach außen nicht aus, weil der Ablenkwinkelbereich bezüglich eines Gehäuses des Sensors 10 oder dergleichen wieder auf einen um 0° symmetrischen Bereich umbenannt werden kann.

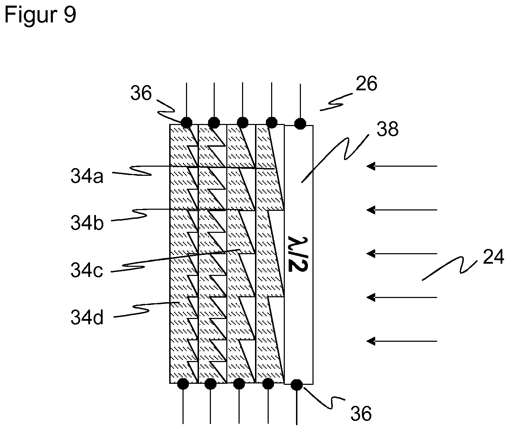

Figur 9 zeigt eine Ausgestaltungsmöglichkeit der Strahlablenkeinrichtung 26 und damit auch der sendeseitigen Strahlablenkeinrichtung 18, sofern dort ein Stapel von Blazegittern für die Ablenkung sorgt. Die Ausführungsform der Figur 9 kann für alle vorgestellten Varianten des Sensors 10 eingesetzt werden.

Zusätzlich zu den Blazegittern 34a-d weist nun die Strahlablenkeinrichtung 26 mindestens eine Wellenplatte 38 auf, insbesondere eine Halbwellenplatte oder auch Viertelwellenplatte. Das lässt sich beispielsweise durch planparallele Schichten aus Flüssigkristallmaterial umsetzen. Die Wellenplatte 38 ist bevorzugt die erste von dem Empfangslichtbündel 24 getroffene Schicht, aber diese Anordnung im Stapel der Blazegitter 34a-d kann auch variiert werden. Auch die Wellenplatte 38 ist wie die Blazegitter 34a-d vorzugsweise elektrisch durch Ansteuerung der Steuer- und Auswertungseinheit 32 schaltbar. Die Wellenplatte 38 verändert unter anderem die Polarisationsrichtung des Empfangslichtbündels 24. Damit ist dann insbesondere ein Messablauf vorstellbar, bei dem zunächst nur eine Polarisationsrichtung des Empfangslichtbündels 24 und dann in einem zweiten Messdurchgang nach dem Umschalten der Wellenplatte 38 die andere Polarisationsrichtung detektiert wird.

In den bisherigen Ausführungsformen lenkt die Strahlablenkeinrichtung 26 das Empfangslichtbündel 24 nur in einer Richtung ab. Es ist denkbar, im Empfangsstrahlengang vor oder hinter der Strahlablenkeinrichtung 26 eine weitere Strahlablenkeinrichtung vorzusehen, die gleichartig aus einem Stapel von Blazegittern mit allen beschriebenen Ausgestaltungsmöglichkeiten aufgebaut, jedoch mit ihren Gitterstrukturen gekreuzt oder verdreht angeordnet ist. Damit ist dann jede der beiden Strahlablenkeinrichtungen für eine Richtung zuständig, also beispielsweise die Strahlablenkeinrichtung 26 für die X-Ablenkung und die weitere Strahlablenkeinrichtung für die Y-Ablenkung. Für derartige gekreuzte Anordnungen muss das Konzept des Blazewinkels auch noch weiter gefasst werden, da nun jedes einzelne Blazegitter für einen noch umfangreicheren Einfallswinkelbereich angepasst werden muss, der nun in sogar zwei Raumrichtungen schwanken kann. Obwohl also jeder Stapel von Blazegittern nur Ablenkungen in einer Raumrichtung durchführt, müssen die Blazewinkel nun zweidimensional modelliert und optimiert werden. Dafür ist es besonders hilfreich, mehrere Blazegitter gleicher Gitterkonstante zur Verfügung zu haben, um für die Optimierung in zwei Dimensionen genügend Freiheitsgrade bereitzustellen.

Ein dreidimensional scannender Sensor 10 kann alternativ durch die Bewegung einer Lichtlinie statt eines Lichtpunktes aufgebaut werden, wobei die Lichtlinie dann senkrecht zu ihrer Längsausdehnung bewegt wird. Eine weitere Variante sieht mehrere Lichtsender 12 und Lichtempfänger 30 vor, um mit mehreren Scanstrahlen parallel arbeiten zu können und so die benötigte Zeit für einen Gesamtscan zu reduzieren, wobei dann vorzugsweise die einzelnen Scanstrahlen durch geeignete Modulation codiert werden, um gegenseitige Beeinflussungen zu vermeiden.

## Patentansprüche

1. Optoelektronischer Sensor (10) mit einem Lichtempfänger (30), einer dem Lichtempfänger (30) vorgeordneten Empfangsoptik (26, 28) und einer Steuer- und Auswertungseinheit (32), wobei die Empfangsoptik (26, 28) eine Strahlablenkeinrichtung (26) mit mehreren hintereinander angeordneten schaltbaren Blazegittern (34a-d) unterschiedlicher Gitterkonstanten aufweist und die Steuer- und Auswertungseinheit (32) dafür ausgebildet ist, ein Blazegitter (34a-d) entsprechend einem gewünschten Ablenkwinkel der Strahlablenkeinrichtung (26) ein- und auszuschalten,
**dadurch gekennzeichnet,**
**dass** mindestens zwei Blazegitter (34c-d) die gleiche Gitterkonstante, jedoch einen untereinander unterschiedlichen Blazewinkel aufweisen.

2. Sensor (10) nach Anspruch 1,
wobei die Steuer- und Auswertungseinheit (32) dafür ausgebildet ist, in Abhängigkeit von dem gewünschten Ablenkwinkel jeweils nur eines der Blazegitter (34c-d) mit gleicher Gitterkonstante einzuschalten.

3. Sensor (10) nach Anspruch 1 oder 2,
wobei die jeweilige Gitterkonstante ein Vielfaches einer Basisgitterkonstanten ist.

4. Sensor (10) nach Anspruch 3,
wobei die Gitterkonstanten in einem Verhältnis 2^n zueinander stehen.

5. Sensor (10) nach einem der vorhergehenden Ansprüche,
wobei die Steuer- und Auswertungseinheit (32) dafür ausgebildet ist, den Ablenkwinkel mit einer Winkelauflösung über einen Empfangswinkelbereich der Strahlablenkeinrichtung (26) zu variieren.

6. Sensor (10) nach einem der vorhergehenden Ansprüche,
wobei der Lichtempfänger (30) ein Einzeldetektor ist.

7. Sensor (10) nach einem der vorhergehenden Ansprüche,
wobei die Empfangsoptik (26, 28) eine weitere Strahlablenkeinrichtung mit mehreren hintereinander angeordneten schaltbaren Blazegittern untereinander unterschiedlicher Gitterkonstanten in zu der Strahlablenkeinrichtung (26) gekreuzter Orientierung der Blazegitter aufweist.

8. Sensor (10) nach einem der vorhergehenden Ansprüche,
wobei die Strahlablenkeinrichtung (26) schräg zu einer mittleren Einfallsrichtung von Empfangslicht (24) steht.

9. Sensor (10) nach einem der vorhergehenden Ansprüche,
wobei die Strahlablenkeinrichtung (26) mindestens eine Wellenplatte (38) aufweist.

10. Sensor (10) nach einem der vorhergehenden Ansprüche,
der einen Lichtsender (12) und eine Sendeoptik (14, 18) mit einer sendeseitigen Strahlablenkeinrichtung (18) zum Aussenden eines Sendelichtstrahls (16) mit einem gewünschten Ablenkwinkel aufweist.

11. Sensor (10) nach Anspruch 10,
wobei die sendeseitige Strahlablenkeinrichtung (18) mehrere hintereinander angeordnete schaltbare Blazegitter unterschiedlicher Gitterkonstanten aufweist.

12. Sensor (10) nach Anspruch 11,
wobei die Strahlablenkeinrichtung (26) in Doppelfunktion als sendeseitige Strahlablenkeinrichtung (18, 26) fungiert.

13. Sensor (10) nach einem der vorhergehenden Ansprüche,
wobei die Steuer- und Auswertungseinheit (32) dafür ausgebildet ist, eine Lichtlaufzeit des ausgesandten und von dem Lichtempfänger (30) wieder empfangenen Sendelichtstrahls (16, 24) zu bestimmen.

14. Verfahren zur Ablenkung eines Lichtstrahls (24) in einem Sensor (10) nach einem der vorhergehenden Ansprüche mit einer Hintereinanderanordnung mehrerer schaltbarer Blazegitter (34a-d) unterschiedlicher Gitterkonstanten, durch die der Lichtstrahl (24) nacheinander fällt, wobei bestimmte Blazegitter (34a-d) entsprechend einem gewünschten Ablenkwinkel der Ablenkung des Lichtstrahls (24) ein- und ausgeschaltet werden und wobei jeweils entsprechend dem Ablenkwinkel unter mindestens zwei Blazegittern (34c-d) gleicher Gitterkonstante, jedoch untereinander unterschiedlicher Blazewinkel nur eines eingeschaltet wird.

15. Verfahren zur optischen Abtastung eines Überwachungsbereichs (20), bei dem nacheinander Empfangslicht (24) aus verschiedenen Ablenkwinkeln empfangen wird, wobei die Ablenkwinkel mit einem Verfahren nach Anspruch 14 variiert werden.

## Claims

1. An optoelectronic sensor (10) having a light receiver (30), receiving optics (26, 28) arranged in front of the light receiver (30), and a control and evaluation unit (32), the receiving optics (26, 28) having a beam deflection unit (26) with a plurality of switchable blaze gratings (34a-d) of different grating constants arranged behind one another, wherein the control and evaluation unit (32) is configured to switch a blaze grating (34a-d) on and off in accordance with a desired deflection angle of the beam deflection unit (26),
**characterized in that** at least two blaze gratings (34c-d) have a same grating constant, but a mutually different blazing angle.

2. The sensor (10) according to claim 1,
wherein the control and evaluation unit (32) is configured to switch on only one of the blaze gratings (34c-d) with the same grating constant at a time, depending on the desired deflection angle.

3. The sensor (10) according to claim 1 or 2,
wherein the respective grating constant is a multiple of a base grating constant.

4. The sensor (10) according to claim 3,
wherein the grating constants are in a ratio of 2^n to each other.

5. The sensor (10) according to any of the preceding claims,
wherein the control and evaluation unit (32) is configured to vary the deflection angle with an angular resolution over a reception angle range of the beam deflection device (26).

6. The sensor (10) according to any of the preceding claims,
wherein the light receiver (30) is a single detector.

7. The sensor (10) according to any of the preceding claims,
wherein the receiving optics (26, 28) comprise a further beam deflection unit with a plurality of switchable blaze gratings arranged behind one another with mutually different grid constants in an orientation of the blaze gratings which is crossed with respect to the beam deflection unit (26).

8. The sensor (10) according to any of the preceding claims,
wherein the beam deflection unit (26) is inclined to a central direction of incidence of received light (24).

9. The sensor (10) according to any of the preceding claims,
wherein the beam deflection unit (26) comprises at least one wave plate (38).

10. The sensor (10) according to any of the preceding claims,
which has a light transmitter (12) and transmission optics (14, 18) with a transmission-side beam deflection unit (18) for transmitting a transmitted light beam (16) with a desired deflection angle.

11. The sensor (10) according to claim 10,
wherein the transmission-side beam deflection device (18) has a plurality of switchable blaze gratings of different grating constants arranged behind one another.

12. The sensor (10) according to claim 11,
wherein the beam deflection units (26) has a dual function also as transmission-side beam deflection unit (18, 26).

13. The sensor (10) according to any of the preceding claims,
wherein the control and evaluation unit (32) is configured to determine a light time of flight of the transmitted light beam (16, 24) which is transmitted and then received by the light receiver (30).

14. A method for deflecting a light beam (24) in a sensor (10) according to one of the preceding claims with a series arrangement of a plurality of switchable blaze gratings (34a-d) of different grating constants, through which the light beam (24) consecutively passes, wherein certain blaze gratings (34a-d) are switched on and off according to a desired deflection angle of the deflection of the light beam (24) and wherein only one respective blaze grating (34c-d) among at least two blaze gratings (34c-d) of the same grating constant but different blazing angles is switched on according to the deflection angle.

15. A method for optically scanning a monitored area (20), wherein received light (24) is successively received from different deflection angles, wherein the deflection angles are varied with a method according to claim 14.

## Revendications

1. Capteur optoélectronique (10) comportant un récepteur de lumière (30), une optique de réception (26, 28) disposée en amont du récepteur de lumière (30) et une unité de commande et d'évaluation (32), l'optique de réception (26, 28) comprenant un moyen de déviation de faisceau (26) pourvu de plusieurs réseaux blazés (34a - d) commutables disposés les uns derrière les autres et ayant des constantes de réseau différentes, et l'unité de commande et d'évaluation (32) étant réalisée pour activer et désactiver un réseau blazé (34a - d) en fonction d'un angle de déviation souhaité du moyen de déviation de faisceau (26),
**caractérisé en ce que**
au moins deux réseaux blazés (34c - d) ont la même constante de réseau, mais un angle de blaze différent entre eux.

2. Capteur (10) selon la revendication 1,
dans lequel l'unité de commande et d'évaluation (32) est réalisée pour activer seulement l'un des réseaux blazés (34c - d) ayant la même constante de réseau, en fonction de l'angle de déviation souhaité.

3. Capteur (10) selon la revendication 1 ou 2,
dans lequel la constante de réseau respective est un multiple d'une constante de réseau de base.

4. Capteur (10) selon la revendication 3,
dans lequel les constantes de réseau sont dans un rapport de 2^n l'une par rapport à l'autre.

5. Capteur (10) selon l'une des revendications précédentes,
dans lequel l'unité de commande et d'évaluation (32) est réalisée pour varier l'angle de déviation avec une résolution angulaire sur une plage d'angle de réception du moyen de déviation de faisceau (26).

6. Capteur (10) selon l'une des revendications précédentes,
dans lequel le récepteur de lumière (30) est un détecteur unique.

7. Capteur (10) selon l'une des revendications précédentes,
dans lequel l'optique de réception (26, 28) comprend un autre moyen de déviation de faisceau présentant plusieurs réseaux blazés commutables disposés les uns derrière les autres et ayant des constantes de réseau différentes dans une orientation croisée des réseaux blazés par rapport au moyen de déviation de faisceau (26).

8. Capteur (10) selon l'une des revendications précédentes,
dans lequel le moyen de déviation de faisceau (26) est positionné en oblique par rapport à une direction d'incidence centrale de la lumière de réception (24).

9. Capteur (10) selon l'une des revendications précédentes,
dans lequel le moyen de déviation de faisceau (26) comprend au moins une lame d'onde (38).

10. Capteur (10) selon l'une des revendications précédentes,
comprenant un émetteur de lumière (12) et une optique d'émission (14, 18) ayant un moyen de déviation de faisceau (18) côté émission pour émettre un faisceau de lumière d'émission (16) avec un angle de déviation souhaité.

11. Capteur (10) selon la revendication 10,
dans lequel le moyen de déviation de faisceau (18) côté émission présente plusieurs réseaux blazés commutables disposés les uns derrière les autres et ayant différentes constantes de réseau.

12. Capteur (10) selon la revendication 11,
dans lequel le moyen de déviation de faisceau (26) a une double fonction en tant que moyen de déviation de faisceau (18, 26) côté émission.

13. Capteur (10) selon l'une des revendications précédentes,
dans lequel l'unité de commande et d'évaluation (32) est réalisée pour déterminer un temps de parcours de lumière du faisceau lumineux d'émission (16, 24) émis et reçu par le récepteur de lumière (30).

14. Procédé pour dévier un faisceau lumineux (24) dans un capteur (10) selon l'une des revendications précédentes, comportant un agencement successif de plusieurs réseaux blazés (34a - d) commutables ayant différentes constantes de réseau, à travers lesquels le faisceau lumineux (24) tombe successivement, certains réseaux blazés (34a - d) étant activés et désactivés en fonction d'un angle de déviation souhaité de la déviation du faisceau lumineux (24) et un seul réseau blazé étant activé respectivement en fonction de l'angle de déviation parmi au moins deux réseaux blazés (34c - d) ayant la même constante de réseau mais des angles de blaze différents entre eux.

15. Procédé de balayage optique d'une zone à surveiller (20), dans lequel la lumière de réception (24) est reçue successivement sous différents angles de déviation, les angles de déviation étant variés par un procédé selon la revendication 14.
